# EUROPÄISCHE PATENTANMELDUNG

(11) **EP 4 354 237 A1**
(43) Veröffentlichungstag der Anmeldung: **17.04.2024**
(21) Anmeldenummer: 23193768.1
(22) Anmeldetag: 28.08.2023
(51) Int. Cl.: G05B 19/406

(54) **VERFAHREN ZUM ERFASSEN MINDESTENS EINES WERKSTÜCKZUSTANDS EINES WERKSTÜCKS BEIM BEARBEITEN DURCH EINE WERKZEUGMASCHINE SOWIE WERKZEUGMASCHINE**

(30) Priorität: 13.10.2022 DE 102022126807
(71) Anmelder: Point 8 GmbH, 44139 Dortmund (DE)
(72) Erfinder: Kühlem, Jan, 97070 Würzburg (DE); Schneider, Sebastian, 44139 Dortmund (DE); Müller, Vanessa, 44269 Dortmund (DE); Dungs, Sascha, 44225 Dortmund (DE)
(74) Vertreter: Schorr, Peter Karl

(57) **Zusammenfassung**

Die Erfindung betrifft ein Verfahren zum Erfassen mindestens eines Werkstückzustands eines Werkstücks (10) beim Bearbeiten durch eine Werkzeugmaschine (2), die mindestens eine Werkzeugaufnahme (4), die mindestens einen die Werkzeugaufnahme (4) antreibbaren elektrischen Drehantrieb (6), die mindestens einen elektrischen Positionierantrieb (8), durch den ein Abstand und/oder ein Winkel zumindest zwischen Werkstück (10) und Werkzeugaufnahme (4) einstellbar ist, die mindestens ein Werkzeug (12) umfasst, das in der Werkzeugaufnahme (4) drehfest angeordnet ist und die mindestens eine ein Speichermittel (14) umfassende Steuereinheit (16) umfasst.

## Beschreibung

Die Erfindung betrifft ein Verfahren zum Erfassen mindestens eines Werkstückzustands eines Werkstücks beim Bearbeiten durch eine Werkzeugmaschine sowie eine Werkzeugmaschine, die durch ein derartiges Verfahren betreibbar ist.

Verfahren zum Erfassen von Bearbeitungsvorgängen in und bei Werkzeugmaschinen sind bekannt. Hierbei werden beispielsweise erfasste und/oder gemessene IST-Werte von Komponenten der Werkzeugmaschine erfasst und mit SOLL-Werten oder mit in vorangegangenen Arbeitszyklen erfassten und rechnerisch gemittelten IST-Werten verglichen, um einen ordnungsgemäßen Betrieb der Werkzeugmaschine oder um eine Abweichung von einem ordnungsgemäßen Betrieb der Werkzeugmaschine festzustellen.

Bei den bekannten Verfahren hat es sich als nachteilig herausgestellt, dass zum Erfassen eines IST-Zustandes eines durch die Werkzeugmaschine zu bearbeitendem Werkstück, Sensormittel vorgesehen werden müssen. Dieses erweist sich in vielen Fällen als aufwendig und kostenintensiv.

Eine fehlende Überwachung des Werkstücks während der Bearbeitung durch die Werkzeugmaschine kann zu Einbußen bei der Qualität und Maßgenauigkeit des fertig bearbeiteten Werkstücks führen.

Eine Aufgabe eines Ausführungsbeispiels der Erfindung ist, ein Verfahren zum Erfassen mindestens eines Werkstückzustands eines Werkstücks beim Bearbeiten durch eine Werkzeugmaschine sowie eine Werkzeugmaschine, die durch ein derartiges Verfahren betreibbar ist, vorzuschlagen, mit dem komponentenreduziert eine verbesserte Überwachung des Werkstücks ermöglicht ist.

Diese Aufgabe wird gelöst durch ein Verfahren zum Erfassen mindestens eines Werkstückzustands eines Werkstücks beim Bearbeiten durch eine Werkzeugmaschine, die mindestens eine Werkzeugaufnahme, die mindestens einen die Werkzeugaufnahme antreibbaren elektrischen Drehantrieb, die mindestens einen elektrischen Positionierantrieb, durch den ein Abstand und/oder ein Winkel zumindest zwischen Werkstück und Werkzeugaufnahme einstellbar ist, die mindestens ein Werkzeug umfasst, das in der Werkzeugaufnahme drehfest angeordnet ist und die mindestens eine ein Speichermittel umfassende Steuereinheit umfasst, mit den Schritten
a. Erfassen oder Bereitstellen von Werkzeug- und Werkstückdaten in dem Speichermittel der Steuereinheit;
b. Bereitstellen von Referenz-Steuerungsdaten des Drehantriebs und des Positionierantriebs, denen ein Referenz-Werkzeugzustand des Werkzeugs und ein Referenz-Werkstückzustand des Werkstücks zumindest in Abhängigkeit der Werkzeug- und Werkstückdaten zugeordnet sind, durch datensatzartiges Hinterlegen der Referenz-Steuerungsdaten des Drehantriebs und des Positionierantriebs in dem Speichermittel der Steuereinheit;
c. Erfassen mindestens eines IST-Steuerungsdatums des Drehantriebs und des Positionierantriebs;
d. Zuordnen des Referenz-Werkzeugzustands des Werkzeugs und des Referenz-Werkstückzustand des Werkstücks durch Auswerten und/oder Interpretieren zumindest der dem erfassten IST-Steuerungsdatum des Drehantriebs und des Positionierantriebs zugeordneten Referenz-Steuerungsdatums des Drehantriebs und des Positionierantriebs durch die Steuereinheit;
e. Erzeugen eines Anzeige-Signals durch das zumindest der Referenz-Werkstückzustand des Werkstücks angezeigt wird und Erzeugen eines Melde-Signals, wenn das dem IST-Steuerungsdatum des Drehantriebs und des Positionierantriebs zugeordnete Referenz-Steuerungsdatum des Drehantriebs und des Positionierantriebs ein Melde-Kriterium erreicht oder überschreitet.

Durch das Erfassen des mindestens einen IST-Steuerungsdatums des Drehantriebs und des Positionierantriebs sowie durch das Zuordnen des Referenz-Werkzeugzustands des Werkzeugs und des Referenz-Werkstückzustands des Werkstücks, durch Auswerten und/oder Interpretieren des erfassten IST-Steuerungsdatums auf Grundlage des Referenz-Steuerungsdatums des Drehantriebs und des Positionierantriebs lässt sich der Werkstückzustand des Werkstücks auf einfache Weise ermitteln. Hierdurch kann auf zusätzliche Sensormittel verzichtet werden.

Darüber hinaus kann durch die beiden zuvor genannten Schritte ebenfalls eine Aussage über den Werkzeugzustand des Werkzeugs auf einfache Weise und ohne Zurückgreifen auf zusätzliches Sensormittel getroffen werden.

Für das Werkzeug können eine Vielzahl von Steuerungsdaten für alle möglichen Betriebszustände, wie Normalbetrieb, Werkzeugbruch, etc, hinterlegt sein. Aus den gemeinsam für Werkzeug und Werkstück erfassten und hinterlegten Steuerungsdaten können dann die für das Werkzeug charakterisierenden Verläufe der Steuerungsdaten mit den gemeinsamen Steuerungsdaten verglichen werden. Abweichung umfassen dann Ereignisse am Werkstück.

Durch das Bereitstellen von Referenz-Steuerungsdaten des Drehantriebs und des Positionierantriebs ist das Verfahren für eine Vielzahl von Bearbeitungsvorgängen verwendbar.

Dadurch, dass das Bereitstellen der Referenz-Steuerungsdaten des Drehantriebs und des Positionierantriebs, ein datensatzartiges Hinterlegen umfasst, kann ohne Rechenaufwand ein einfacher Abgleich der IST-Steuerungsdaten des Drehantriebs und des Positionierantriebs mit den Referenz-Steuerungsdaten des Drehantriebs und des Positionierantriebs erfolgen.

Unter einem Erfassen mindestens eines Werkstückzustands wird nachfolgend auch ein Bewerten und Prognostizieren des Werkstückzustands verstanden.

Der mindestens eine Positionierantrieb kann der Werkzeugaufnahme und/oder einer Werkstückaufnahme zugeordnet sein. Solchenfalls kann die Werkzeugaufnahme bezüglich eines ortsfesten Werkstückes oder das Werkstück bezüglich einer ortsfesten Werkzeugaufnahme oder Werkzeugaufnahme und Werkstück relativ zum Raum bewegt werden. Mit anderen Worten kann das Werkstück zum Werkzeug, das Werkzeug zum Werkstück oder beide aufeinander zu oder voneinander wegbewegt werden. Das mindestens eine Referenz-Steuerungsdatum des Drehantriebs und des Positionierantriebs lässt sich im Speichermittel der Steuereinheit hinterlegen oder bereitstellen.

Das Erfassen des mindestens einen IST-Steuerungsdatums des Drehantriebs und des Positionierantriebs kann in einer Anfahrphase, in der das Werkzeug durch den Drehantrieb und/oder Positionierantrieb in Richtung Werkstück bewegt wird, in einer Ausfahrphase, in der das Werkzeug vom Werkstück entfernt wird und/oder in einer Arbeitsphase, in der das Werkzeug das Werkstück, insbesondere spanend und materialabtragend, bearbeitet, also beim Bearbeiten des Werkstücks erfolgen.

Durch das Erzeugen eines Anzeige-Signals ist der Werkstückzustand anwendererfassbar und/oder maschinenerfassbar. Hierdurch kann dem Bedienpersonal, das die Werkzeugmaschine überwacht, jederzeit eine Information über den Zustand des Werkstücks zur Verfügung gestellt werden.

Ferner kann bei einer Weiterbildung des Verfahrens das Erzeugen eines Anzeige-Signals einen Werkzeugzustand erfassbar machen. Hierdurch kann dem Bedienpersonal, das die Werkzeugmaschine überwacht, jederzeit eine Information über den Zustand des Werkzeugs zur Verfügung gestellt werden.

Durch das Erzeugen eines Melde-Signals, wenn das dem IST-Steuerungsdatum des Drehantriebs und des Positionierantriebs zugeordnete Referenz-Steuerungsdatum des Drehantriebs und des Positionierantriebs ein Melde-Kriterium erreicht oder überschreitet, ist ein kritisches Ereignis wie beispielsweise eine Abweichung in Bezug auf Maße und Oberfläche oder Dergleichen, erfassbar. Eine Abweichung kann beispielsweise auch einen Werkstückbruch umfassen, bei dem Material des Werkstücks ungeplant abgeplatzt ist.

Die einzelnen Verfahrensschritte können in periodischen Zeitabständen durchgeführt werden, beispielsweise in Zeitabschnitten von 60 Sekunden und weniger, insbesondere von 45 Sekunden und weniger, insbesondere von 30 Sekunden und weniger, weiter insbesondere von weniger als 15 Sekunden und weniger sowie insbesondere von weniger als 5 Sekunden und weniger. Hierdurch lässt sich die durch die Steuereinheit zu bearbeitende Datenmenge reduzieren.

Darüber hinaus ist bei einer Ausführungsform des Verfahrens vorgesehen, dass sämtliche Verfahrensschritte durchgängig erfolgen und insbesondere das Erfassen des mindestens einen IST-Steuerungsdatums des Drehantriebs und des Positionierantriebs permanent erfolgt. Hierdurch ist eine Überwachung der Werkzeugmaschine in Echtzeit ermöglicht, wodurch ein Melde-Kriterium ebenfalls in Echtzeit erfasst wird. Dementsprechend erfolgen auch die weiteren Verfahrensschritte permanent und durchgängig.

Bei einer Ausführungsform des Verfahrens erweist es sich als vorteilhaft, wenn die erfassten oder bereitgestellten Werkzeug- und Werkstückdaten in dem Speichermittel der Steuereinheit, die Geometrien, Materialien und Materialeigenschaften sowie Toleranzen des Werkstücks im Rohteilzustand und im Endzustand und Toleranzen des Werkzeugs umfassen.

Darüber hinaus erweist es sich bei einer Weiterbildung des Verfahrens als vorteilhaft, wenn das Bereitstellen von Referenz-Steuerungsdaten oder von IST-Steuerungsdaten des Drehantriebs das Bereitstellen bzw. Erfassen der Drehzahl, des Drehmoments, der Drehgeschwindigkeit, der Position, der Stromstärke und/oder der elektrischen Leistung des Drehantriebs umfasst und wenn das Bereitstellen von Referenz-Steuerungsdaten oder der IST-Steuerungsdaten des Positionierantriebs das Bereitstellen bzw. Erfassen der Drehzahl, des Drehmoments, der Vorschub-Geschwindigkeit, der Position, der Stromstärke und/oder der elektrischen Leistung des Positionierantriebs umfasst.

Wenn das Bereitstellen von Referenz-Steuerungsdaten oder der IST-Steuerungsdaten des Drehantriebs das Bereitstellen, bzw. Erfassen der Drehzahl, des Drehmoments, der Drehgeschwindigkeit, der Position, der Stromstärke und/oder der elektrischen Leistung des Drehantriebs umfasst, sind dieses Daten, die auf einfache Weise durch den Antrieb erfassbar und ohnehin messbar sind. Hierdurch sind keine zusätzlichen Sensormittel notwendig. Die verfügbaren Daten bilden ein virtuelles Sensormittel.

Gleiches gilt, wenn das Bereitstellen von Referenz-Steuerungsdaten oder von IST-Steuerungsdaten des Positionierantriebs das Bereitstellen, bzw. Erfassen der Drehzahl, des Drehmoments, der Vorschub-Geschwindigkeit, der Position, der Stromstärke und/oder der elektrischen Leistung des Positionierantriebs umfasst.

Hierbei kann auf die ohnehin in der Werkzeugmaschine verbaute Komponenten zurückgegriffen werden, wodurch das Verfahren ohne das Vorsehen zusätzlicher Sensormittel ermöglicht ist. Das Auswerten der zuvor genannten Daten führt zum Betreiben des Verfahrens in der Art eines virtuellen Sensormittels, bei dem aufgrund der erfassten Daten Rückschlüsse auf das Werkstück und/oder das Werkzeug getroffen werden können.

Es erweist sich als vorteilhaft, wenn der Referenz-Werkzeugzustand des Werkzeugs und der Referenz-Werkstückzustand des Werkstücks zumindest in Abhängigkeit der zugeordneten Werkzeug- und Werkstückdaten ein singuläres Ereignis, wie Werkzeug- oder Werkstückbruch, umfasst oder ein einen über eine Zeitreihe erfassten Zustand umfasst.

Grundsätzlich ist es denkbar, dass das Anzeige-Signal ausschließlich das Anzeigen des Referenz-Werkstückzustands des Werkstücks umfasst. Bei einer Weiterbildung des Verfahrens ist vorgesehen, dass das Erzeugen des eines Anzeige-Signals zusätzlich ein Anzeigen des Referenz-Werkzeugzustand des Werkzeugs umfasst.

Hierdurch sind durch ein und dasselbe Verfahren Rückschlüsse auf den IST-Zustand des Werkzeugs und den IST-Werkstückzustand des Werkstücks treffbar.

Es sind Ausführungsformen des Verfahrens denkbar, bei denen ein Anzeigen des Anzeige-Signals und/oder Melde-Signals an einem Anzeigemittel der Werkzeugmaschine erfolgt, welches mittelbar oder unmittelbar an der Werkzeugmaschine angeordnet ist und/oder welches der Werkzeugmaschine funktional zugeordnet ist und/oder bei denen ein Weiterleiten und Anzeigen des Anzeige-Signals und/oder Melde-Signals an ein externes Anzeigemittel erfolgt, welches von der Werkzeugmaschine unabhängig ist.

Dadurch, dass das Anzeige-Signal und das Melde-Signal an einem Anzeigemittel an der Werkzeugmaschine und/oder an einem externen Anzeigemittel anzeigbar und zuvor an diese weiterleitbar sind, kann Bedienpersonal an der Maschine oder Kontrollpersonal in einem Kontrollraum auf den Werkstückzustand des Werkstücks und den Werkzeugzustand des Werkzeugs der Werkzeugmaschine aufmerksam gemacht werden.

Insbesondere, wenn das Anzeige-Signal und das Melde-Signal an ein externes Anzeigemittel weitergeleitet werden, also an ein Anzeigemittel, welches von der Werkzeugmaschine unabhängig und von dieser räumlich beabstandet ist, können beispielsweise mehrere Werkzeugmaschinen durch ein und dieselbe Bedienperson oder Kontrollperson überwacht werden. Hierbei kann die Anzeige des Anzeige-Signals und des Melde-Signals automatisch erfolgen oder durch Abfrage der Bedienperson.

Das Anzeige-Signal oder das Melde-Signal kann grundsätzlich das Anzeigen einer beliebigen Information umfassen. Es erweist sich als vorteilhaft, wenn der durch das Anzeige-Signal anzeigbare Referenz-Werkstückzustand zumindest eine Information über die Aufmassabweichung, Positionierungsabweichung, Toleranzabweichung des Werkstücks, Oberflächenbeschaffenheiten, wie Rauigkeit, Exzentrizität von Bohrlöchern, Materialeinschlüsse, Materialeinbrüche oder Unebenheiten, Schwingungen oder Verschleiß umfasst.

Ferner erweist es sich als vorteilhaft, wenn der durch das Anzeige-Signal anzeigbare Referenz-Werkzeugzustand zumindest eine Information über die Restlebensdauer des Werkzeugs und/oder über den Verschleiß des Werkzeugs umfasst und/oder wenn der durch das Melde-Signal anzeigbare Referenz-Werkzeugzustand einen Ausbruch des Werkzeugs, einen Bruch des Werkzeugs, Schwingungen des Werkzeugs und/oder eine Überlastung des Werkzeugs umfasst.

Durch beide zuvor genannten Varianten des Verfahrens ist der Bedienperson oder der Kontrollperson unmittelbar der IST-Werkstückzustand und der IST-Werkzeugzustand darstellbar.

Darüber hinaus erweist es sich als vorteilhaft, wenn das IST-Steuerungsdatums und das Referenz-Steuerungsdatum des Drehantriebs und des Positionierantriebs die elektrische Stromstärke und/oder die elektrische Leistung des Drehantriebs und des Positionierantriebs umfasst. Solchenfalls umfassen das IST-Steuerungsdatum des Drehantriebs und des Positionierantriebs und das Referenz-Steuerungsdatum des Drehantriebs und des Positionierantriebs physikalische Größen des Drehantriebs und des Positionierantriebs, die einfach erfassbar sind und für deren Erfassung insbesondere keine zusätzlichen Sensormittel notwendig sind, sondern auf ohnehin in der Werkzeugmaschine erfassbare und hinterlegte Daten rückgreifbar ist.

Die elektrische Stromstärke und/oder die elektrische Leistung des Drehantriebs und des Positionierantriebs umfassen Eingangsgrößen zur Ermittlung des Referenz-Werkstückzustands und/oder Referenz-Werkzeugzustands.

Es erweist sich als vorteilhaft, wenn das Verfahren nachfolgenden Schritt umfasst:
Filtern der erfassten IST-Steuerungsdaten des Drehantriebs und des Positionierantriebs und/oder Speichern der erfassten IST-Steuerungsdaten des Drehantriebs und des Positionierantriebs in dem Speichermittel.

Durch das Filtern der erfassten IST-Steuerungsdaten des Drehantriebs und des Positionierantriebs lassen sich Messfehler herausfiltern. Durch das Speichern der erfassten IST-Steuerungsdaten des Drehantriebs und des Positionierantriebs in dem Speichermittel, lassen sich Daten für eine spätere Auswertung, insbesondere Validierung, zur Verfügung stellen.

Das Speichermittel kann beispielsweise ein internes Speichermittel der Werkzeugmaschine umfassen, das der Werkzeugmaschine unmittelbar zugeordnet ist. Darüber hinaus kann das Speichermittel ein externes Speichermittel umfassen, das von der Werkzeugmaschine separiert und räumlich beabstandet ist.

Bei einer Ausführungsform des Verfahrens ist vorgesehen, dass das Speichermittel der Steuereinheit eine verteilte Rechnerstruktur umfasst.

Hierdurch ist auf einfache Weise auf verfügbare Rechnerkapazitäten zugreifbar, wodurch beim Ausführen des Verfahrens auch große Datenmengen flexibel handhabbar be- und verarbeitet werden können.

Es erweist sich als vorteilhaft, wenn das Bereitstellen der Referenz-Steuerungsdaten des Drehantriebs und des Positionierantriebs ein Hinterlegen mindestens eines Algorithmus` zur Berechnung der Referenz-Steuerungsdaten des Drehantriebs und des Positionierantriebs sowie ein Berechnen der Referenz-Steuerungsdaten des Drehantriebs und des Positionierantriebs umfasst.

Wenn das Bereitstellen der Referenz-Steuerungsdaten des Drehantriebs und des Positionierantriebs ein Hinterlegen mindestens eines Algorithmus zur Berechnung der Referenz-Steuerungsdaten des Drehantriebs und des Positionierantriebs umfasst, ist das Verfahren vielseitig und flexibel anwendbar, ohne datensatzartige Hinterlegung, insbesondere Datenbanken, vorhalten zu müssen.

Solchenfalls ist das Verfahren auch auf unterschiedliche Werkzeugmaschinen unterschiedlicher Bauart anwendbar.

Darüber hinaus erweist es sich als vorteilhaft, wenn das Bearbeiten des Werkstücks eine An- und Ausfahrphase sowie eine Arbeitsphase des Werkzeugs umfasst und dass der An- und Ausfahrphase sowie der Arbeitsphase jeweils ein Referenz-Steuerungsdatum des Drehantriebs und des Positionierantriebs zuordenbar oder zugeordnet ist.

Hierdurch lässt sich der Werkzeugzustand des Werkzeugs bereits erfassen, bevor eine Bearbeitung des Werkstücks erfolgt. Wenn beispielsweise im Zuge der Anfahrphase ein Werkzeugzustand erfasst wird, durch den eine Bearbeitung des Werkstücks nicht oder nur durch hohe Qualitätseinbußen möglich ist, erfasst wird, kann das Werkzeug gewechselt werden, bevor das Werkstück beschädigt wird.

Zum Validieren der bereitgestellten Referenz-Steuerungsdaten des Drehantriebs und des Positionierantriebs, erweist es sich als vorteilhaft, wenn das Verfahren nachfolgende Schritte umfasst:
Messen und/oder Analysieren des Werkstücks und des Werkzeugs mit einem Prüfmittel zum Ermitteln des IST-Werkstückzustands des Werkstücks und IST-Werkzeugzustands des Werkzeugs sowie Validieren und/oder Anpassen des Referenz-Werkstückzustands und des Referenz-Werkzeugzustand durch Zuordnen des IST-Steuerungsdatums des Drehantriebs und des Positionierantriebs beim erfassten IST-Werkstückzustands und IST-Werkzeugzustand als neues Referenz-Steuerungsdatum des Drehantriebs und des Positionierantriebs.

Solchenfalls sind die hinterlegten Referenz-Steuerungsdaten des Drehantriebs und des Positionierantriebs und/oder der hinterlegte Algorithmus anpassbar, validierbar und verfeinerbar.

Hierdurch lässt sich ein Unterschied des Referenz-Werkstückzustands zu einem realen IST-Werkstückzustand weiter reduzieren und eine Vorhersagegenauigkeit kontinuierlich verbessern.

Schließlich wird die Aufgabe gelöst durch eine Werkzeugmaschine, die Mittel umfasst, das Verfahren mit den zuvor genannten Merkmalen zu betreiben, mit mindestens einer Werkzeugaufnahme, mit mindestens einem die Werkzeugaufnahme antreibbaren elektrischen Drehantrieb, mit mindestens einem elektrischen Positionierantrieb, durch den ein Abstand und/oder ein Winkel zumindest zwischen Werkstück und Werkzeugaufnahme einstellbar ist, mit mindestens einem Werkzeug, das in der Werkzeugaufnahme drehfest angeordnet ist und mit mindestens einer ein Speichermittel umfassenden Steuereinheit.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Verfahrens sowie der Werkzeugmaschine.

In der Zeichnung zeigt:
- Figur 1: Eine Seitenansicht auf eine schematisch dargestellte Werkzeugmaschine;
- Figur 2: Ein Ablaufdiagramm eines Ausführungsbeispiels eines erfindungsgemäßen Verfahrens.

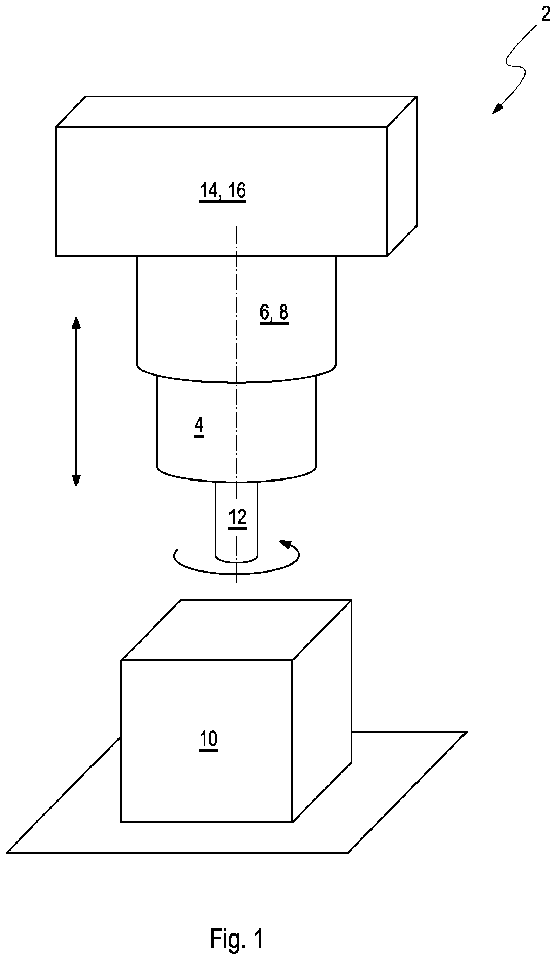

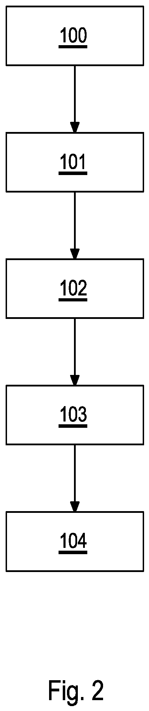

Figur 1 zeigt eine insgesamt mit dem Bezugszeichen 2 versehene Werkzeugmaschine 2, die nach einem Verfahren gemäß Figur 2 betreibbar ist. Die Werkzeugmaschine 2 umfasst eine Werkzeugaufnahme 4 sowie einen die Werkzeugaufnahme 4 antreibbaren, insbesondere elektrischen, Drehantrieb 6.

Darüber hinaus umfasst die Werkzeugmaschine 2 einen, insbesondere elektrischen, Positionierantrieb 8, durch den ein Abstand zwischen einem Werkstück 10 und der Werkzeugaufnahme 4 einstellbar ist. In der Werkzeugaufnahme 4 ist ein Werkzeug 12 anordenbar, das in der Werkzeugaufnahme 4 drehfest angeordnet ist. Darüber hinaus umfasst die in Figur 1 dargestellte Werkzeugmaschine 2 eine ein Speichermittel 14 umfassende Steuereinheit 16.

Anhand von Figur 2, unter Zuhilfenahme und Verweis auf die in Figur 1 schematisch dargestellten einzelnen Komponenten der Werkzeugmaschine 2, wird das erfindungsgemäße Verfahren beschrieben:
In einem ersten Verfahrensschritt 100 werden Werkzeug- und Werkstückdaten, wie Abmessungen und Material, in dem Speichermittel 14 und/oder der Steuereinheit 16 erfasst oder bereitgestellt.

In einem nachfolgenden Schritt 101 wird mindestens ein Referenz-Steuerungsdatum des Drehantriebs 6 und des Positionierantriebs 8, dem ein Referenz-Werkzeugzustand des Werkzeugs 12 und ein Referenz-Werkstückzustand des Werkstücks 10 zumindest in Abhängigkeit der Werkzeug- und Werkstückdaten zugeordnet sind, bereitgestellt. Dieses erfolgt durch datensatzartiges Hinterlegen der Referenz-Steuerungsdaten des Drehantriebs 6 und des Positionierantriebs 8 in dem Speichermittel 14 der Steuereinheit 16.

In einem nachfolgenden Schritt 102 wird mindestens ein IST-Steuerungsdatum des Drehantriebs 6 und des Positionierantriebs 8 erfasst.

Das mindestens eine IST-Steuerungsdatum des Drehantriebs 6 und des Positionierantriebs 8 kann beispielsweise eine elektrische Stromstärke und/oder die elektrische Leistung des Drehantriebs 6 und des Positionierantriebs 8 umfassen.

In einem nachfolgenden Schritt 103 erfolgt ein Zuordnen des Referenz-Werkzeugzustands des Werkzeugs 12 und des Referenz-Werkstückzustands des Werkstücks 10. Dieses erfolgt durch Auswerten und/oder Interpretieren zumindest der erfassten IST-Steuerungsdaten des Drehantriebs 6 und des Positionierantriebs 8 zugeordneten Referenz-Steuerungsdatum des Drehantriebs 6 und des Positionierantriebs 8.

Hierbei kann die Auswertung und Interpretation beispielsweise das Feststellen eines Referenz-Werkzeugzustands und eines Referenz-Werkstückzustands umfassen, der Informationen über die Restlebensdauer des Werkzeugs 12, über den Verschleiß des Werkzeugs 12 oder einen Ausbruch des Werkzeugs 12, einen Bruch des Werkzeugs 12 und/oder eine Überlastung des Werkzeugs 12 umfasst. Ferner können Informationen über das Werkstück 10 vorliegen, wie beispielsweise Informationen über Aufmaß, Abweichung, Positionierungsabweichung, Toleranzabweichung, Oberflächenbeschaffenheiten, wie Rauigkeit, Exzentrizität von Bohrlöchern, Materialeinschlüssen, Materialeinbrüche oder Unebenheiten, Schwingungen oder Verschleiß.

In einem hieran anschließenden Schritt 104 wird ein Anzeigesignal erzeugt, durch das der Referenz-Werkstückzustand des Werkstücks 10 anzeigbar ist. Ferner wird ein Meldesignal erzeugt, wenn das dem IST-Steuerungsdatum des Drehantriebs 6 und des Positionierantriebs 8 zugeordnete Referenz-Steuerdatum des Drehantriebs 6 und des Positionierantriebs 8 ein Melde-Kriterium erreicht oder überschreitet.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Werkzeugmaschine
- 4: Werkzeugaufnahme
- 6: Drehantrieb
- 8: Positionierantrieb
- 10: Werkstück
- 12: Werkzeug
- 14: Speichermittel
- 16: Steuereinheit

- 100- 104: Verfahrensschritte

## Patentansprüche

1. Verfahren zum Erfassen mindestens eines Werkstückzustands eines Werkstücks (10) beim Bearbeiten durch eine Werkzeugmaschine (2), die mindestens eine Werkzeugaufnahme (4), die mindestens einen die Werkzeugaufnahme (4) antreibbaren elektrischen Drehantrieb (6), die mindestens einen elektrischen Positionierantrieb (8), durch den ein Abstand und/oder ein Winkel zumindest zwischen Werkstück (10) und Werkzeugaufnahme (4) einstellbar ist, die mindestens ein Werkzeug (12) umfasst, das in der Werkzeugaufnahme (4) drehfest angeordnet ist und die mindestens eine ein Speichermittel (14) umfassende Steuereinheit (16) umfasst, mit den Schritten:
a. Erfassen oder Bereitstellen von Werkzeug- und Werkstückdaten in dem Speichermittel (14) der Steuereinheit (16);
b. Bereitstellen von Referenz-Steuerungsdaten des Drehantriebs (6) und des Positionierantriebs (8), denen ein Referenz-Werkzeugzustand des Werkzeugs (12) und ein Referenz-Werkstückzustand des Werkstücks (10) zumindest in Abhängigkeit der Werkzeug- und Werkstückdaten zugeordnet sind, durch datensatzartiges Hinterlegen der Referenz-Steuerungsdaten des Drehantriebs (6) und des Positionierantriebs (8) in dem Speichermittel (14) der Steuereinheit (16);
c. Erfassen mindestens eines IST-Steuerungsdatums des Drehantriebs (6) und des Positionierantriebs (8);
d. Zuordnen des Referenz-Werkzeugzustands des Werkzeugs (12) und des Referenz-Werkstückzustand des Werkstücks (10) durch Auswerten und/oder Interpretieren zumindest der dem erfassten IST-Steuerungsdatum des Drehantriebs (6) und des Positionierantriebs (8) zugeordneten Referenz-Steuerungsdatums des Drehantriebs (6) und des Positionierantriebs (8) durch die Steuereinheit (16);
e. Erzeugen eines Anzeige-Signals durch das zumindest der Referenz-Werkstückzustand des Werkstücks (10) angezeigt wird und Erzeugen eines Melde-Signals, wenn das dem IST-Steuerungsdatum des Drehantriebs (6) und des Positionierantriebs (8) zugeordnete Referenz-Steuerungsdatum des Drehantriebs (6) und des Positionierantriebs (8) ein Melde-Kriterium erreicht oder überschreitet.

2. Verfahren nach Anspruch 1, **dadurch gekennzeichnet, dass** die erfassten oder bereitgestellten Werkzeug- und Werkstückdaten in dem Speichermittel (14) der Steuereinheit (16), die Geometrien, Materialien und Materialeigenschaften sowie Toleranzen des Werkstücks (10) im Rohteilzustand und im Endzustand und Toleranzen des Werkzeugs (12) umfasst.

3. Verfahren nach Anspruch 1 oder 2, **dadurch gekennzeichnet, dass** das Bereitstellen von Referenz-Steuerungsdaten oder der IST-Steuerungsdaten des Drehantriebs (6) das Bereitstellen, bzw. Erfassen der Drehzahl, des Drehmoments, der Drehgeschwindigkeit, der Position, der Stromstärke und/oder der elektrischen Leistung des Drehantriebs (6) umfasst und dass das Bereitstellen von Referenz-Steuerungsdaten oder der IST-Steuerungsdaten des Positionierantriebs (8) das Bereitstellen, bzw. Erfassen der Drehzahl, des Drehmoments, der Vorschub-Geschwindigkeit, der Position, der Stromstärke und/oder der elektrischen Leistung des Positionierantriebs (8) umfasst.

4. Verfahren nach einem der vorhergehenden Ansprüche, **dadurch gekennzeichnet, dass** der Referenz-Werkzeugzustand des Werkzeugs (12) und der Referenz-Werkstückzustand des Werkstücks (10) zumindest in Abhängigkeit der zugeordneten Werkzeug- und Werkstückdaten ein singuläres Ereignis, wie Werkzeug- oder Werkstückbruch, umfasst oder ein einen über eine Zeitreihe erfassten Zustand umfasst.

5. Verfahren nach einem der vorhergehenden Ansprüche, **dadurch gekennzeichnet, dass** das Erzeugen des eines Anzeige-Signals zusätzlich ein Anzeigen des Referenz-Werkzeugzustand des Werkzeugs (12) umfasst.

6. Verfahren nach einem der vorhergehenden Ansprüche, **dadurch gekennzeichnet, dass** durch Anzeigen des Anzeige-Signals und/oder Melde-Signals an einem Anzeigemittel der Werkzeugmaschine (2), welches mittelbar oder unmittelbar an der Werkzeugmaschine (2) angeordnet ist und/oder welches der Werkzeugmaschine (2) funktional zugeordnet ist und/oder Weiterleiten und Anzeigen des Anzeige-Signals und/oder Melde-Signals an ein externes Anzeigemittel, welches von der Werkzeugmaschine (2) unabhängig ist.

7. Verfahren nach einem der vorhergehenden Ansprüche, **dadurch gekennzeichnet, dass** der durch das Anzeige-Signal anzeigbare Referenz-Werkstückzustand zumindest eine Information über die Aufmassabweichung, Positionierungsabweichung, Toleranzabweichung des Werkstücks (10), Oberflächenbeschaffenheiten, wie Rauigkeit, Exzentrizität von Bohrlöchern, Materialeinschlüsse, Materialeinbrüche oder Unebenheiten, Schwingungen oder Verschleiß umfasst.

8. Verfahren nach einem der vorhergehenden Ansprüche, **dadurch gekennzeichnet, dass** der durch das Anzeige-Signal anzeigbare Referenz-Werkzeugzustand zumindest eine Information über die Restlebensdauer des Werkzeugs (12) und/oder über den Verschleiß des Werkzeugs (12) umfasst und/oder dass der durch das Melde-Signal anzeigbare Referenz-Werkzeugzustand einen Ausbruch des Werkzeugs (12), einen Bruch des Werkzeugs (12), Schwingungen des Werkzeugs (12) und/oder eine Überlastung des Werkzeugs (12) umfasst.

9. Verfahren nach einem der vorhergehenden Ansprüche, **dadurch gekennzeichnet, dass** das IST-Steuerungsdatums und das Referenz-Steuerungsdatum des Drehantriebs (6) und des Positionierantriebs (8), die elektrische Stromstärke und/oder die elektrische Leistung des Drehantriebs (6) und des Positionierantriebs (8) umfasst.

10. Verfahren nach einem der vorhergehenden Ansprüche, **gekennzeichnet durch** Filtern der erfassten IST-Steuerungsdaten des Drehantriebs (6) und des Positionierantriebs (8) und/oder Speichern der erfassten IST-Steuerungsdaten des Drehantriebs (6) und des Positionierantriebs (8) in dem Speichermittel (14).

11. Verfahren nach einem der vorhergehenden Ansprüche, **dadurch gekennzeichnet, dass** das Speichermittel (14) der Steuereinheit (16) eine verteilte Rechnerstruktur umfasst.

12. Verfahren nach einem der vorhergehenden Ansprüche, **dadurch gekennzeichnet, dass** das Bereitstellen der Referenz-Steuerungsdaten des Drehantriebs (6) und des Positionierantriebs (8) ein Hinterlegen mindestens eines Algorithmus' zur Berechnung der Referenz-Steuerungsdaten des Drehantriebs (6) und des Positionierantriebs (8) sowie ein Berechnen der Referenz-Steuerungsdaten des Drehantriebs (6) und des Positionierantriebs (8) umfasst.

13. Verfahren nach einem der vorhergehenden Ansprüche, **dadurch gekennzeichnet, dass** das Bearbeiten des Werkstücks (10) eine An- und Ausfahrphase sowie eine Arbeitsphase des Werkzeugs (12) umfasst und dass der An- und Ausfahrphase sowie der Arbeitsphase jeweils ein Referenz-Steuerungsdatum des Drehantriebs (6) und des Positionierantriebs (8) zuordenbar oder zugeordnet ist.

14. Verfahren nach einem der vorhergehenden Ansprüche, **gekennzeichnet durch** Messen und/oder Analysieren des Werkstücks (10) und des Werkzeugs (12) mit einem Prüfmittel zum Ermitteln des IST-Werkstückzustands des Werkstücks (10) und IST-Werkzeugzustands des Werkzeugs (12) sowie Validieren und/oder Anpassen des Referenz-Werkstückzustands und des Referenz-Werkzeugzustand durch Zuordnen des IST-Steuerungsdatums des Drehantriebs (6) und des Positionierantriebs (8) beim erfassten IST-Werkstückzustands und IST-Werkzeugzustand als neues Referenz-Steuerungsdatum des Drehantriebs (6) und des Positionierantriebs (8).

15. Werkzeugmaschine (2), die Mittel umfasst, das Verfahren nach einem der Ansprüche 1 bis 14 zu betreiben, mit mindestens einer
Werkzeugaufnahme (4), mit mindestens einem die Werkzeugaufnahme (4) antreibbaren elektrischen Drehantrieb (6), mit mindestens einem elektrischen Positionierantrieb (8), durch den ein Abstand und/oder ein
Winkel zumindest zwischen Werkstück (10) und Werkzeugaufnahme (4) einstellbar ist, mit mindestens einem Werkzeug (12), das in der
Werkzeugaufnahme (4) drehfest angeordnet ist und mit mindestens einer ein Speichermittel (14) umfassenden Steuereinheit (16).
